# EUROPEAN PATENT APPLICATION

(11) **EP 4 322 316 A1**
(43) Date of publication of application: **14.02.2024**
(21) Application number: 22784985.8
(22) Date of filing: 07.04.2022
(51) Int. Cl.: H01M 50/533, H01M 50/538, H01M 10/04, B26D 7/08, H01M 10/0587

(54) **ELECTRODE ASSEMBLY, BATTERY CELL, BATTERY CELL PROCESSING DEVICE, AND BATTERY PACK AND VEHICLE COMPRISING SAME**

(30) Priority: 09.04.2021 KR 20210046800; 31.03.2022 KR 20220040633
(71) Applicant: LG Energy Solution, Ltd., Seoul 07335 (KR)
(72) Inventor: KIM, Minwoo, Daejeon 34122 (KR); KIM, Do Gyun, Daejeon 34122 (KR); CHUNG, Joo Young, Daejeon 34122 (KR)
(74) Representative: Goddar, Heinz J.
(86) International application number: PCT/KR2022/005019
(87) International publication number: WO 2022/216076

(57) **Abstract**

The present invention discloses an electrode assembly, a battery cell, and a battery cell cutting device, and a battery pack and vehicle including the battery cell. The electrode assembly includes an electrode cell body portion in which a separator is stacked between a first electrode sheet and a second electrode sheet in the form of a sheet, and the first electrode sheet, the second electrode sheet, and the separator are wound, and an uncoated portion, on which an active material layer is not coated, is formed in an end portion of each of the first electrode sheet and the second electrode sheet in a width direction. The electrode cell body portion includes a recessed portion disposed in the uncoated portion of the electrode cell body portion at a core side, and has a height at which the recessed portion is more recessed than the uncoated portion, which is disposed more outward than the uncoated portion at the core side in a radial direction, in an axial direction. A plurality of cut lines formed to a predetermined depth in the axial direction are provided in an outer portion than the recessed portion in a radial direction in the uncoated portion of the electrode cell body portion. The plurality of cut lines are arranged in a line to form a plurality of cut line arrays. The cut line array is formed by an ultrasonically vibrating cutter portion including blades each having a shape corresponding thereto. A bending planned portion of the uncoated portion disposed between the two cut line arrays adjacent in a peripheral direction is pressed and laid down by a press portion to form a forming portion.

## Description

### [Technical Field]

This application claims priority to and the benefit of Korean Patent Application Nos. 10-2021-0046800, filed on April 9, 2021 and 10-2022-0040633, filed on March 31, 2022, the disclosures of which are incorporated herein in their entirety by reference.

The present invention relates to an electrode assembly, a cutting device and a bending device for an uncoated portion of the electrode assembly, a battery cell including the electrode assembly, and a battery pack and vehicle including the battery cell.

### [Background Art]

In general, a secondary battery includes a positive electrode, a negative electrode, and an electrolyte, and generates electrical energy using a chemical reaction. The secondary battery, which has high applicability according to a product group and electrical characteristics such as high energy density, is widely applied to not only a portable device, but also an electric vehicle (EV) or a hybrid electric vehicle (HEV), which is driven by an electrical driving source.

Such a secondary battery has a primary advantage of remarkably reducing the use of fossil fuels. The secondary battery also has an advantage that no by-products are generated according to the use of energy. Thus, the secondary battery is attracting attention as a new energy source for improving eco-friendliness and energy efficiency.

Types of currently widely used secondary batteries include lithium-ion batteries, lithium-polymer batteries, nickel-cadmium batteries, nickel-hydrogen batteries, nickel-zinc batteries, and the like. An operating voltage of a unit secondary battery cell, i.e., a unit battery cell 100, is about 2.5 V to 4.5 V. Accordingly, when a higher output voltage is required, a plurality of battery cells may be connected in series to configure a battery pack. In addition, according to a charge/discharge capacity required for the battery pack, a plurality of battery cells 100 may be connected in parallel to configure a battery pack. Accordingly, the number and electrical connection type of battery cells included in the battery pack may be variously set according to the required output voltage or charge/discharge capacity.

Meanwhile, as types of the unit secondary battery cell, cylindrical battery, prismatic battery, and pouch-type battery cells are known. In the case of the cylindrical battery cell, a separator, which is an insulator, is interposed between a positive electrode and a negative electrode and wound to form an electrode assembly in the form of a jelly roll, and the electrode assembly is inserted into a battery can to configure a battery. In addition, a strip-shaped electrode tab may be connected to an uncoated portion of each of the positive electrode and the negative electrode. The electrode tab electrically connects between the electrode assembly and an electrode terminal exposed to the outside. For reference, a positive electrode terminal is a cap plate of a seal that seals an opening of the battery can, and a negative electrode terminal is the battery can. However, according to the conventional cylindrical battery cell having the above structure, there are problems of high resistance, generation of a large amount of heat, and low current-collection efficiency because current is concentrated in the strip-shaped electrode tab coupled to the positive electrode uncoated portion and/or the negative electrode uncoated portion. That is, a cross-sectional area of the electrode tab may be rapidly reduced, which may cause bottlenecks in current flow.

In a small-sized cylindrical battery cell with a form factor of 18650 or 21700, the resistance and heat are not a major issue. However, when the form factor is increased in order to apply the cylindrical battery cell to electric vehicles, a large amount of heat may be generated around the electrode tab during a rapid charging process, and thus a problem may occur in which the cylindrical battery cell ignites.

In order to solve such a problem, a cylindrical battery cell (a so-called tab-less cylindrical battery cell) having a structure in which current collection efficiency is improved by designing a positive electrode uncoated portion and a negative electrode uncoated portion to be located at upper and lower ends of a jelly-roll type electrode assembly, respectively, and welding current collector plates to these uncoated portions has been proposed.

Each of a first electrode sheet and a second electrode sheet has a structure in which an active material is applied to a sheet-shaped current collector, and includes an uncoated portion on one long side thereof along a winding direction.

An electrode assembly is fabricated by sequentially stacking the first electrode sheet and the second electrode sheet together with two separators and then winding the stack in one direction. In this case, the uncoated portions of the first electrode sheet and the second electrode sheet are disposed in opposite directions.

After the winding process, the uncoated portions of the first electrode sheet and the uncoated portion of the second electrode sheet are bent toward a core. Thereafter, the uncoated portions are respectively coupled to the current collector plates by welding.

Since separate electrode tabs are not coupled to the positive electrode uncoated portion and the negative electrode uncoated portion, the current collector plates are connected to external electrode terminals, and a current path is formed to have a large cross-sectional area along a direction of a winding axis of the electrode assembly, there is an advantage in that a resistance of a battery cell may be lowered. This is because the resistance is inversely proportional to the cross-sectional area of the path through which current flows.

In order to improve the welding properties of the uncoated portion and the current collector plate in the tab-less cylindrical battery cell, the uncoated portion should be bent as flat as possible by applying a strong pressure to a welding point of the uncoated portion.

However, when the welding point of the uncoated portion is bent, a shape of the uncoated portion may be irregularly distorted and deformed. In this case, the deformed portion may come into contact with an electrode plate having an opposite polarity to cause an internal short circuit or a fine crack in the uncoated portion. In addition, as the uncoated portion adjacent to the core of the electrode assembly is bent, all or a significant portion of a cavity in the core of the electrode assembly is blocked. In this case, a problem is caused in an electrolyte injection process. That is, the cavity in the core of the electrode assembly is used as a path through which an electrolyte is injected. However, when the corresponding path is blocked, the injection of the electrolyte becomes difficult. In addition, an electrolyte injector may interfere with the uncoated portion near the core in a process of being inserted into the cavity, which may cause a problem of tearing of the uncoated portion.

Further, the bent portion of the uncoated portion, to which the current collector plate is welded, should be overlapped in several layers and should not have an empty space (empty gap). In this way, sufficient welding strength may be obtained, and a problem in which laser penetrates into the electrode assembly and damages the separator or active material even when the latest technology, such as laser welding, is used may be prevented.

Korean Patent Application Publication No. 20-2022-0023100 (published on March 2, 2022) discloses a cylindrical secondary battery having an improved current collecting structure. In the cylindrical secondary battery, a current collector plate is welded to an end portion of an uncoated portion in a state of being in line contact therewith, and thus there is a problem in that a cross-sectional area in which the current collector plate and the uncoated portion are welded is reduced due to a gap between the current collector plate and the uncoated portion. Accordingly, electrical resistance increases in the welding cross-sectional area, which is a path of a current, and thus a heating amount of a battery cell may increase and the possibility of ignition may increase.

Korean Patent Application Publication No. 2016-0110610 (published on September 22, 2016) discloses a secondary battery and a cylindrical lithium secondary battery. Disclosed is a secondary battery having a configuration in which a first collector plate is electrically connected to a first uncoated portion so as to be in direct contact therewith, and a second current collector plate is electrically connected to a second uncoated portion so as to be in direct contact therewith. This also has a problem in that a contact cross-sectional area of the current collector plate and the uncoated portion is reduced due to a gap between the current collector plate and the uncoated portion because the first and second current collector plates are connected to end portions of the first and second uncoated portions in a state of being in line contact therewith, respectively. There is a limit to increasing the contact cross-sectional area.

### [Disclosure]

### [Technical Problem]

The present invention is directed to providing an electrode assembly, a battery cell, and a battery cell processing device, which allow a current path to be expanded by increasing a welding cross-sectional area of an electrode assembly and a current collector plate, and a battery pack and vehicle including the battery cell.

The present invention is also directed to providing an electrode assembly, a battery cell, and a battery cell processing device, which allow an increase in heating amount of the battery cell to be suppressed and the possibility of ignition to be reduced even when an electrode assembly is applied to a large-capacity battery cell, and a battery pack and vehicle including the battery cell.

The present invention is also directed to providing an electrode assembly, a battery cell, and a battery cell processing device, which allow a boundary portion between a portion (forming portion) formed by bending a portion (bending planned portion) to be bent and a portion (unbent portion) not to be bent to be prevented from being torn or irregularly distorted and deformed during a process of bending an uncoated portion, and a battery pack and vehicle including the battery cell.

The present invention is also directed to providing an electrode assembly, a battery cell, and a battery cell processing device, which allow a hollow portion of a core of an electrode assembly to be open in an axial direction by preventing a case in which a cavity in the core is blocked when an uncoated portion adjacent to the core of the electrode assembly is bent, and a battery pack and vehicle including the battery cell.

The present invention is also directed to providing an electrode assembly, a battery cell, and a battery cell processing device, which allow a heating amount of the battery cell to be reduced or the possibility of an explosion to be significantly reduced, and a battery pack and vehicle including the battery cell.

Objects of the present invention are not limited to the above-described objects, and other objects and advantages of the present invention will be understood by the following description and will be more definitely understood through the embodiments of the present invention. It is also to be easily understood that the objectives and advantages of the present invention may be realized and attained by means and a combination thereof described in the appended claims.

### [Technical Solution]

In order to achieve the above-described objects, the present invention may be applied to an electrode assembly including an electrode cell body portion in which a first electrode sheet and a second electrode sheet having different polarities and a separator for insulation therebetween are stacked and wound.

The electrode cell body portion may be wound in a form of a jelly roll.

The stacking of the sheets may be performed in the order of the first electrode sheet, the separator, the second electrode sheet, and the separator.

The winding may be performed along a length direction of the stacked sheets. Thus, a length of the electrode cell body portion in the form of a jelly roll in an axial direction may correspond to a width of the stacked sheets.

An uncoated portion on which an active material layer is not coated is provided at an end portion of at least one of the first electrode sheet and the second electrode sheet in a width direction. Accordingly, the uncoated portion is provided at an end portion of the electrode cell body portion in the axial direction. The uncoated portion may be provided on one side end portion of the electrode cell body portion in the axial direction, or may be provided on both side end portions of the electrode cell body portion in the axial direction.

A plurality of cut lines in which a portion of the uncoated portion is cut in the axial direction may be provided in the uncoated portion of the electrode cell body portion of the electrode assembly.

The plurality of cut lines may be arranged in a line along a radial direction of the electrode cell body portion to form a cut line array.

Due to the cut lines or the cut line array, the uncoated portion may be divided into a portion (bending planned portion) to be bent and the other portion (unbent portion).

The above forming process may be a bending process.

The bending process may be a process of laying down the uncoated portion in the radial direction.

The bending process may be a process of laying down the uncoated portion toward a core.

The forming portion may be a portion between two adjacent cut line arrays.

The forming portion may have a shape extending in the radial direction.

The two adjacent cut line arrays may be substantially parallel to each other.

The electrode assembly may include a plurality of forming portions.

The unbent portion may be formed in a sector shape along a circumferential direction around a core portion of the electrode cell body portion.

The unbent portion may have a central angle of 30° to 180°. More specifically, the unbent portion may have a central angle of 45° to 180°, and more preferably, a central angle of 60° to 120°.

The unbent portion may have a shape in which the uncoated portion is not bent and extends in the axial direction.

The plurality of forming portions may be radially disposed around the core portion of the electrode cell body portion.

The forming portion may be formed in a shape in which the bending planned portion is bent in the radial direction of the electrode cell body portion and laid down. The bending planned portion may be laid down toward the core portion.

The forming portions may be formed in parallel with the radial direction of the electrode cell body portion.

The electrode cell body portion may be formed in a cylindrical shape.

The core portion may be formed in a hollow shape passing through a central portion of the electrode cell body portion.

In order to prevent the core portion from being blocked by the bending planned portion, that is, the forming portion, when the bending planned portion is laid down toward the core portion, a portion of the uncoated portion disposed close to the core portion among the core portion and an outer circumference of the electrode assembly may be removed.

That is, the uncoated portion may be removed in a predetermined section adjacent to the core portion in a winding direction.

The removal of the uncoated portion may be performed before the winding process after fabricating an electrode stack. Alternatively, the removal of the uncoated portion may be performed in advance before fabricating the electrode stack, or may also be performed after the winding process.

When the electrode stack in the shape in which the uncoated portion on a core side is removed in this way is wound, the electrode stack has a state in which the uncoated portion near the core is entirely removed along the circumferential direction before dividing the bending planned portion and the unbent portion in a peripheral direction through the cut line. That is, the bending planned portion is also not provided in a region of the uncoated portion on the core side. Accordingly, the laid-down forming portion does not cover the core portion of the electrode assembly even when the bending planned portion is bent toward the core.

The present invention provides a battery cell including the electrode assembly.

The battery cell includes a battery can in which the electrode assembly is accommodated and which is electrically connected to one of the first electrode sheet and the second electrode sheet to have a first polarity, a sealing cap portion configured to seal an open end of the battery can, and a first current collector plate electrically connected to the other one of the first electrode sheet and the second electrode sheet to have a second polarity.

The first current collector plate may be fixed to the forming portion of the electrode assembly by welding or the like to be electrically connected thereto.

One of the first electrode sheet and the second electrode sheet may be directly connected to the battery can or may be connected to the battery can through a second current collector plate.

The battery can may include a support portion that further protrudes inward in the radial direction from an inner circumference of the battery can. The support portion may support the sealing cap portion.

The battery cell may further include an insulator for preventing a short circuit of different polarities.

The insulator may be interposed between the battery can and the sealing cap portion and may insulate the battery can from the sealing cap portion. More specifically, the insulator may be interposed between an outer circumferential surface of the sealing cap portion and an inner circumferential surface of the battery can, and may be interposed between the support portion and the sealing cap portion.

The insulator may be interposed between the battery can and the first current collector plate and may insulate the battery can from the first current collector plate. For example, the insulator may be interposed between the first current collector plate and the support portion.

The present invention provides a battery pack including at least one above-described battery cell.

The present invention provides a vehicle including at least one above-described battery pack.

The present invention provides a processing device configured to cut and bend an uncoated portion provided at an end portion of an electrode cell body portion of the electrode assembly in an axial direction.

The processing device provides a cutting device configured to cut the uncoated portion.

The cutting device includes a cutter portion configured to form a cut line in the uncoated portion in an axial direction of the electrode assembly while moving in the axial direction.

The processing device includes the cutting device, and a press portion configured to perform a bending process on a bending planned portion disposed between cut line arrays formed by the cutting device.

The press portion forms a forming portion by pressing and laying down the bending planned portion of the uncoated portion in a radial direction.

The bending planned portion is pressed in the radial direction, and accordingly, as a portion corresponding to a lower end portion of the cut line is bent, the bending planned portion may be laid in the radial direction.

The cutter portion may include a plurality of blades radially disposed in the cutter portion.

The blade extends in the axial direction and a blade edge may be formed in a front end portion of the blade in the axial direction.

The cutter portion may further include a vibration generating portion. The vibration generating portion may generate fine vibrations.

The press portion may lay down the bending planned portion of the uncoated portion toward the core portion of the electrode cell body portion while moving in the radial direction (radiation direction) of the electrode cell body portion.

The present invention provides a method of manufacturing the above-described battery cell.

The method of manufacturing the battery cell includes stacking a first electrode sheet, a second electrode sheet, and a separator, and winding the stack to fabricate an electrode assembly.

Accordingly, the electrode assembly may include an electrode cell body portion in which the electrode sheets and the separators are wound together.

One side end portion of at least one of the first electrode sheet and the second electrode sheet in a width direction includes an uncoated portion on which an active material layer is not coated. The uncoated portion extends along a length direction at an end portion of the first electrode sheet and/or the second electrode sheet in a width direction. When both the first electrode sheet and the second electrode sheet have the uncoated portion, the uncoated portion may be provided at each of both side end portions in the width direction.

Accordingly, the uncoated portion may be provided in the end portion of the electrode cell body portion in an axial direction in a shape extending and protruding in the axial direction.

In the state in which the electrode sheets and the separator are stacked, a portion of the uncoated portion disposed close to a core side may be removed by as much as a predetermined length in the length direction.

When the electrode stack is wound in the state in which the portion of the uncoated portion disposed close to the core side is removed, a core-side uncoated portion region in which a portion of the uncoated portion in the axial direction is removed may be provided at the core side of the electrode cell body portion. Then, a length, at which the uncoated portion extends outward in the axial direction from the electrode cell body portion, in the core-side uncoated portion region may be less than a length, at which the uncoated portion extends outward in the axial direction from the electrode cell body portion, in an uncoated portion region that is disposed more outward than the core-side uncoated portion region in a radial direction.

The removal of the uncoated portion may be performed before the winding process after forming the electrode stack. Such a process may be performed through, for example, laser processing.

The removal of the uncoated portion may have already been performed in the process of providing the electrode sheet before forming the electrode stack.

The removal of the uncoated portion may also be performed after winding the electrode stack to form the electrode cell body portion. Such a process may be performed, for example, by a cutter with ultrasonically vibrating blades.

The electrode cell body portion may have a cylindrical shape.

The electrode cell body portion may include a hollow core portion.

The method of manufacturing the battery cell includes forming a cut line in the axial direction at a predetermined location of the uncoated portion that is provided at the end portion of the electrode cell body portion in the axial direction.

Specifically, the removing of the uncoated portion includes cutting the uncoated portion, by a cutter portion, by as much as a predetermined depth in the axial direction while moving in the axial direction of the battery cell, and forming the cut line in the uncoated portion in the axial direction.

The cutting depth may be set to a point from a boundary portion of the uncoated portion and a coated portion to a location spaced outward in the axial direction by a predetermined distance. That is, the cut line may be formed up to the point from the boundary portion of the uncoated portion and the coated portion to the location spaced outward in the axial direction by the predetermined distance.

A plurality of cut lines may be provided. Cut line arrays defined by the plurality of cut lines may be radially disposed with respect to the electrode cell body portion.

The method of manufacturing the battery cell may further include forming a forming portion by bending and laying down a bending planned portion, which is a portion between a pair of cut line arrays adjacent to each other, in the radial direction.

The bending process may be performed by pressing the bending planned portion in the radial direction by a press portion.

The portion to be bent and formed by the bending process may be a portion corresponding to an end portion of the cut line in a depth direction, that is, a location spaced outward in the axial direction from the boundary portion of the uncoated portion and the coated portion by a predetermined distance.

The forming portion formed by performing the bending process on the bending planned portion may be radially formed around the core portion of the electrode cell body portion.

The forming portion may be formed in a shape in which the bending planned portion of the uncoated portion is laid down toward the core portion of the electrode cell body portion.

The forming portion may be formed along the radial direction of the electrode cell body portion.

The unbent portion may be formed by cutting a portion of the uncoated portion, which is spaced outward in the axial direction from the boundary portion of the uncoated portion and the coated portion by a predetermined distance.

The cutter portion may cut the uncoated portion by being vibrated by a vibration generating portion. The cutter portion may be an ultrasonic cutter.

A first current collector plate is placed on the uncoated portion in which the forming portion is formed, and a portion of the first current collector plate in contact with the forming portion may be welded to the forming portion.

The present invention provides an electrode assembly manufactured by the processing device and the manufacturing method described above.

In an electrode cell body portion of the electrode assembly, a separator is stacked between a first electrode sheet and a second electrode sheet in the form of a sheet, the first electrode sheet, the second electrode sheet, and the separator are wound, and an uncoated portion on which the active material layer is not coated is formed in an end portion of each of the first electrode sheet and the second electrode sheet in a width direction.

The electrode assembly may include a recessed portion disposed in an uncoated portion (15) of the electrode cell body portion at a core side, and having a height at which the recessed portion is more recessed than the uncoated portion, which is disposed more outward than the uncoated portion (15) at the core side in a radial direction, in an axial direction.

The electrode assembly may include a plurality of cut lines that are provided in the uncoated portion of the electrode cell body portion in an outer portion than the recessed portion in the radial direction and formed to a predetermined depth in the axial direction

The electrode assembly may include a plurality of cut line arrays formed by arranging the plurality of cut lines in a line.

] The electrode assembly may include a plurality of forming portions formed by pressing and laying down bending planned portions of the uncoated portion disposed between the two cut line arrays adjacent in a peripheral direction.

The two adjacent cut line arrays may be parallel to each other, and may each extend in a substantially radial direction.

A cutting depth of the cut line reaches a predetermined portion that is spaced outward in the axial direction from a boundary portion of the uncoated portion and a coated portion by a predetermined distance.

The recessed portion may have a height corresponding to the predetermined portion in the axial direction.

The bending planned portion may be bent and formed at a portion corresponding to the predetermined portion in the axial direction.

A width of the recessed portion in the radial direction may correspond to a height of the bending planned portion in the axial direction, which is measured from a lower end portion of the cut line disposed adjacent to the recessed portion in the radial direction.

### [Advantageous Effects]

According to the present invention, a forming portion is welded to a current collector plate in a state of being in surface contact therewith, and thus a current path of an electrode assembly and the current collector plate can be relatively increased as an area of the forming portion is increased.

According to the present invention, since the forming portion increases the current path by as much as the sum of gaps between uncoated portions, even when applied to a battery cell having a large capacity, an increase in a heating amount of the battery cell can be suppressed and the possibility of ignition can be reduced.

According to the present invention, the uncoated portion having a small thickness is cut in an axial direction by an ultrasonically vibrating cutter, so that a cut line can be accurately formed in the uncoated portion without deforming the uncoated portion.

According to the present invention, in the uncoated portion, an unbent portion and a bending planned portion are separated from each other in a peripheral direction by the cut line, and then the bending planned portion is pressed and laid down to form a forming portion. Accordingly, when the forming portion is formed by pressing the bending planned portion, a boundary portion of the forming portion and the unbent portion can be prevented from being torn or irregularly distorted and deformed.

According to the present invention, since the boundary portion of the forming portion and the unbent portion is prevented from being torn or deformed, electrode sheets of opposite polarities can be prevented from being in contact with each other in the torn or deformed portion.

According to the present invention, the cut line is formed in a partial section of the uncoated portion in the axial direction so that the bending planned portion is guided to be bent at a portion of a height corresponding to an end portion of the cut line in a depth direction. Accordingly, a boundary portion of the uncoated portion and a coated portion is prevented from being torn or deformed when the uncoated portion is bent, so that an active material applied to the coated portion can be prevented from being detached from the coated portion or a bonding force can be prevented from being weakened. Accordingly, it is possible to suppress a decrease in performance and capacity of the battery cell.

According to the present invention, an edge of a separator can be prevented from being delaminated or damaged due to the torn or deformed portion of the boundary portion. Thus, a short circuit between a first electrode sheet and a second electrode sheet can be prevented. Furthermore, a heating amount of the battery cell can be reduced or the possibility of an explosion can be significantly reduced.

According to the present invention, the forming portion does not cover a hollow core portion of the electrode assembly. Accordingly, an electrolyte impregnation property can be further increased, and it is possible to secure a space for a welding device or the like to enter and exit through the hollow portion.

In addition to the above-described effects, specific effects of the present invention will be described together with the following detailed description for implementing the present invention.

### [Description of Drawings]

FIG. 1 is a plan view schematically illustrating an electrode cell stack according to the present invention.
FIG. 2 is a cross-sectional view of the electrode cell stack of FIG. 1 taken along line A-A.
FIG. 3 is a perspective view illustrating a state in which an electrode cell body portion is manufactured by winding the electrode cell stack of FIG. 1.
FIG. 4 is a perspective view illustrating a state in which the electrode cell body portion according to the present invention is cut by a cutter portion.
FIG. 5 is a perspective view illustrating the cutter portion according to the present invention.
FIG. 6 is a rear view illustrating the cutter portion according to the present invention.
FIG. 7 is a view of cut line arrays formed in an uncoated portion of the electrode cell body portion by the cutter portion when viewed in an axial direction.
FIGS. 8 and 9 are views illustrating a state in which a forming portion is formed by bending a bending planned portion of the electrode cell body portion.
FIG. 10 is a flowchart illustrating a method of manufacturing a battery cell according to the present invention.
FIG. 11 is a cross-sectional view illustrating an electrode assembly according to the present invention.
FIG. 12 is a perspective view illustrating a state in which the electrode assembly according to the present invention is accommodated in a pack housing.
FIG. 13 is a perspective view illustrating a state in which a battery pack according to the present invention is installed in a vehicle.

### [Description of Reference Numerals]

10: electrode stack
11: first electrode sheet
12: second electrode sheet
13: separator
14: coated portion
15: uncoated portion
16: boundary portion
100: battery cell
101: pack housing
110: electrode assembly
111: electrode cell body portion
112: core portion
112a: core-side uncoated portion region, recessed portion
113: cut line (cut line array)
115a: unbent portion
117: forming portion
117a: bending planned portion
120: battery can
121: battery can body portion
122: support portion
123: clamping portion
130: first current collector plate
132: central hole portion
140: second current collector plate
150: sealing cap portion
151: cap plate
152: external terminal
153: vent plate
155: lead portion
157: insulator
210: cutter portion
211: blade
213: vibration generating portion
215: first communication hole portion
220: second cutter portion
221: second blade
223: second vibration generating portion
230: press portion
300: vehicle
C: removed portion (uncoated portion at core portion)
θ1 and θ2: central angles

### [Modes of the Invention]

Hereinafter, exemplary embodiments of the present invention will be described with reference to the accompanying drawings in detail.

The present invention is not limited to the embodiments disclosed below and susceptible to various modifications, and can be implemented in various different forms. The present embodiments are provided only to complete the disclosure of the present invention and assist those skilled in the art to completely understand the scope of the present invention. Accordingly, the present invention is not limited to the embodiments disclosed below, and it should be understood that configurations of any one embodiment and configurations of another embodiment are substituted or added to each other, and all modifications, equivalents and substitutes are fall within the technical spirit and scope of the present invention.

The accompanying drawings are merely intended to facilitate understanding of embodiments disclosed in this specification, and the technical spirit disclosed herein is not limited by the accompanying drawings, and it should be understood that all modifications, equivalents, and substitutes fall within the spirit and technical scope of the present invention. In the drawings, sizes or thicknesses of components may be exaggerated in consideration of the easy of understanding or the like, but the protection scope of the present invention should not be construed as being limited thereto.

The terms used herein are only used to describe a particular implementation or embodiment, and are not intended to limit the present invention. In addition, singular forms are intended to include plural forms as well, unless the context clearly indicates otherwise. In the present specification, terms such as "including," "composed of ~," and the like are intended to indicate the existence of features, numbers, operations, actions, components, parts, or combinations thereof disclosed in the specification. It should be understood that the terms such as "including," "composed of ~," and the like are not intended to preclude the possibility that one more other features, numbers, steps, actions, components, parts, or combinations thereof may be present or added.

Although the terms including ordinal numbers such as "first," "second," and the like may be used to describe various components, these components should not be limited by these terms. The terms are used only for the purpose of distinguishing one component from another.

When it is said that a component is "connected" to another component, it should be understood that the component is directly connected to the another component or still another component may be interposed therebetween. On the other hand, when it is said that a component is "directly connected" or "directly linked" to another component, it should be understood that other components are not present therebetween.

When it is said that a component is on an "upper portion" or "lower portion" of another component, it should be understood that the component may be disposed directly on another component, as well as still another component may be interposed therebetween.

Unless otherwise defined, all terms used herein, including technical and scientific terms, have the same meaning as commonly understood by one of ordinary skill in the art to which the present invention belongs. It should be further understood that terms, such as those defined in commonly used dictionaries, should be interpreted as having a meaning that is consistent with their meaning in the context of the relevant art and are not to be interpreted in an idealized or overly formal sense unless expressly so defined herein.

Hereinafter, an electrode assembly according to an embodiment of the present invention will be described.

For convenience of description, in the present specification, a direction in a length direction of a winding axis of an electrode assembly 110, which is wound in the form of a jelly roll, is referred to as an axial direction Y. In addition, a direction surrounding the winding axis is referred to as a circumferential direction X or a peripheral direction. In addition, a direction closer to or away from the winding axis is referred to as a radial direction or a radiation direction Z. In particular, among them, the direction closer to the winding axis is referred to as a centripetal direction, and the direction away from the winding axis is referred to as a centrifugal direction.

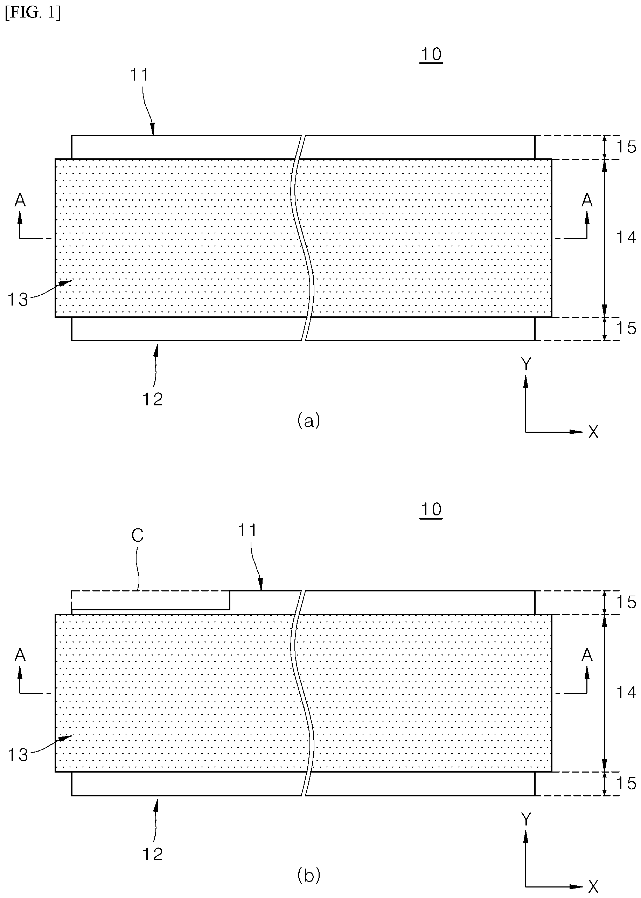

Referring to FIGS. 1 to 3, an electrode stack 10 according to the embodiment of the present invention includes a first electrode sheet 11, a second electrode sheet 12, and a separator 13. The electrode stack 10 is formed by stacking the separator 13 between the first electrode sheet 11 and the second electrode sheet 12 in the form of a sheet. For example, the electrode stack 10 may be formed by stacking one first electrode sheet 11, one second electrode sheet 12, and two separators 13. In addition, the electrode stack 10 may also be formed by stacking two or more first electrode sheets 11, two or more second electrode sheets 12, and three or more separators 13. As the stacked number of the first electrode sheets 11, the second electrode sheets 12, and the separators 13 is increased in the electrode stack 10, the winding time and manufacturing time of the electrode assembly 110 having a desired diameter may be reduced.

Each of the first electrode sheet 11 and the second electrode sheet 12 includes a coated portion 14, on which an active material is coated, and an uncoated portion 15 on which the active material is not coated. The uncoated portion 15 may be formed at one side of each of the first electrode sheet 11 and the second electrode sheet 12 in a width direction. At least a portion of the uncoated portion 15 may be used as an electrode tab by itself. When the electrode assembly 110 is wound in a cylindrical shape, the uncoated portion 15 of the first electrode sheet 11 is disposed on one side (upper or lower side in FIG. 1) in the axial direction and the uncoated portion 15 of the second electrode sheet 12 may be disposed on the other side in the axial direction.

The uncoated portion 15 of the first electrode sheet 11 and the uncoated portion 15 of the second electrode sheet 12 may be formed to have the same width. In addition, the uncoated portion 15 of the first electrode sheet 11 and the uncoated portion 15 of the second electrode sheet 12 may be formed to have different widths.

The first electrode sheet 11 may be a negative electrode sheet coated with a negative electrode active material, and the second electrode sheet 12 may be a positive electrode sheet coated with a positive electrode active material. Of course, the first electrode sheet 11 may be a positive electrode sheet coated with a positive electrode active material, and the second electrode sheet 12 may be a negative electrode sheet coated with a negative electrode active material.

Each of the first electrode sheet 11 and the second electrode sheet 12 includes a current collector composed of a metal foil and an active material layer. The metal foil may be aluminum or copper. The active material layer may be coated on one surface or both surfaces of each of the first electrode sheet 11 and the second electrode sheet 12.

The width of the uncoated portion 15 is formed to be significantly less than the width of the coated portion 14. The uncoated portion 15 may be formed in the form of a band having a small width. In addition, the uncoated portion 15 may be formed of a plurality of segments, which are spaced apart from each other along a length direction of the uncoated portion 15 and formed in a sawtooth shape. The shape of each of the segments may be changed into a quadrangular shape, a triangular shape, a semi-circular shape, a semi-elliptical shape, a parallelogramic shape, or the like.

The uncoated portion 15 may have a shape in which a partial section C close to a core side is removed. The corresponding section may be removed through laser processing or the like before winding after forming the electrode stack 10.

Of course, the corresponding section may be in a shape in which the uncoated portion of the corresponding section C is removed in advance in an operation of providing the electrode sheet, or a removal portion 112a of the uncoated portion on the core side may be formed through post-processing after the winding operation.

In the present invention, the positive electrode active material coated on the first electrode sheet 11 and the negative electrode active material coated on the second electrode sheet 12 may be used without limitation as long as they are active materials known in the art.

The positive electrode active material may include a layered compound or compound substituted with one or more transition metals such as lithium cobalt oxide (LiCoO₂) and lithium nickel oxide (LiNiO₂); lithium manganese oxides (LiMnO₂) such as the chemical formula Li₁₊ₓMn₂ₓO₄ (where x is 0 to 0.33), LiMnO₃, LiMn₂O₃, and LiMnO₂; lithium copper oxide (Li₂CuO₂); vanadium oxides such as LiV₃O₈, LiFe₃O₄, V₂O₅, and Cu₂V₂O₇; Ni site type lithium nickel oxides expressed by the chemical formula LiNi₁₋ₓMₓO₂ (where M is Co, Mn, Al, Cu, Fe, Mg, B, or Ga and x is 0.01 to 0.3); lithium manganese composite oxides expressed by the chemical formula LiMn₂₋ₓMₓO₂ (where M=Co, Ni, Fe, Cr, Zn, or Ta and x=0.01 to 0.1) or Li₂Mn₃MO₈ (where M=Fe, Co, Ni, Cu, or Zn); LiMn₂O₄ in which Li in the formula is partially substituted with alkaline earth metal ions; a disulfide compound; and Fe₂(MoO₄)₃, or a compound whose main component is a lithium intercalation material such as a composite oxide formed by a combination thereof. Although the above types are used as the positive electrode active material, the present invention is not limited thereto.

] For example, the positive electrode current collector has a thickness of 3 to 500 µm. The positive electrode current collector is not particularly limited as long as it has conductivity without causing chemical changes in a battery. Examples of the positive electrode current collector may include stainless steel, aluminum, nickel, titanium, calcined carbon, or aluminum or stainless steel whose surface has been treated with carbon, nickel, titanium, silver, or the like. The electrode current collector may have fine irregularities formed in a surface thereof to increase the adhesion between the electrode current collector and the positive electrode active material. The electrode current collector may be used in various forms such as a film, a sheet, a foil, a net, a porous body, a foamed body, a nonwoven fabric body, and the like.

A conductive material may be additionally mixed with positive electrode active material particles. The conductive material is added in an amount of 1 to 50 wt% based on the total weight of the mixture including the positive electrode active material. The conductive material is not particularly limited as long as it has high conductivity without causing chemical changes in a battery. Examples of the conductive material may include graphite such as natural graphite and artificial graphite; carbon black such as carbon black, acetylene black, Ketjen black, channel black, furnace black, lamp black, and thermal black; conductive fibers such as carbon fiber and metal fiber; metal powders such as carbon fluoride, aluminum, and nickel powders; conductive whiskers such as zinc oxide and potassium titanate; conductive oxides such as titanium oxide; and conductive materials such as a polyphenylene derivative.

Further, the negative electrode sheet may be fabricated by applying and drying negative electrode active material particles on a negative electrode current collector, and may further include components such as the conductive material described above, a binder, a solvent, and the like as needed.

For example, the negative electrode current collector has a thickness of 3 to 500 µm. The negative electrode current collector is not particularly limited as long as it has conductivity without causing chemical changes in a battery. Examples of the negative electrode current collector may include copper, stainless steel, aluminum, nickel, titanium, calcined carbon, aluminum or stainless steel whose surface has been treated with carbon, nickel, titanium, silver, or the like, an aluminum-cadmium alloy, or the like. In addition, like the positive electrode current collector, fine irregularities may be formed in the surface to enhance the binding force of the negative electrode active material, and may be used in various forms such as a film, a sheet, a foil, a net, a porous body, a foamed body, a nonwoven fabric body, and the like.

Examples of the negative electrode active material may include a carbon such as non-graphitized carbon or graphite-based carbon; a metal complex oxide such as LiₓFe₂O₃ (0<=x<=1), LiₓWO₂ (0<=x<=1), SnₓMe₁₋ₓMe'_{y}O_{z} (Me: Mn, Fe, Pb, Ge; Me': Al, B, P, Si, elements in Group I, II, and III on the periodic table, a halogen; 0 <x<=1; 1<=y<=3; 1 <= z <= 8); a lithium metal; a lithium alloy; a silicon-based alloy; a tin-based alloy; an oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer such as polyacetylene; a Li-Co-Ni-based material, or the like.

A binder polymer capable of being used in the electrode sheet is a component that assists in bonding the electrode active material particles and the conductive material and binding the electrode active material particles to the electrode current collector, and added in an amount of, for example, 1 to 50 wt% based on the total weight of the mixture including the electrode active material particles. Examples of the binder polymer may include at least one binder polymer selected from the group consisting of polyvinylidene fluoride-co-hexafluoropropylene (PVdF), polyvinylidene fluoride-co-trichloroethylene, polymethylmethacrylate, polybutylacrylate, polyacrylonitrile, polyvinylpyrrolidone, polyvinylacetate, polyethylene-co-vinyl acetate, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan, and carboxyl methyl cellulose, or a mixture of two or more thereof, but the present invention is not limited thereto.

Non-limiting examples of the solvent used in the manufacturing of the electrodes include acetone, tetrahydrofuran, methylene chloride, chloroform, dimethylformamide, N-methyl-2-pyrrolidone (NMP), cyclohexane, water, or a mixture thereof. Such solvents provide an appropriate level of viscosity so that a slurry coating layer can be formed at a desired level on a surface of the electrode current collector.

The separator 13 includes a porous polymer substrate, and a porous coating layer located on both surfaces of the porous polymer substrate and including inorganic particles and a binder polymer.

The porous polymer substrate may be a polyolefin-based porous substrate.

The polyolefin porous substrate may be in the form of a film or a non-woven web. By having the porous structure as described above, the electrolyte may be smoothly moved between the positive electrode and the negative electrode. The porous structure may increase an electrolyte impregnation property of the substrate itself so that excellent ion conductivity may be secured, and may prevent an increase in resistance inside an electrochemical device so that performance degradation of the electrochemical device may be prevented.

The polyolefin porous substrate used in the present invention may be any planar porous substrate that is generally used in electrochemical devices, and the material or shape thereof may be variously selected as desired.

The polyolefin porous substrate may be, but is not limited to, a film or non-woven web formed of high-density polyethylene, low-density polyethylene, linear low-density polyethylene, ultrahigh molecular weight polyethylene, polypropylene, or a mixture of two or more thereof. However, the present invention is not limited thereto.

The polyolefin porous substrate may have a thickness of 8 to 30 µm, but this is only an example, and the polyolefin porous substrate may also have a thickness that is out of the above range in consideration of mechanical properties or high-efficiency charge/discharge characteristics of a battery.

The separator 13 according to the present invention may have a thickness of 1 to 100 µm or 5 to 50 µm. When the thickness of the separator 13 is less than 1 µm, the function of the separator 13 may not be sufficiently exhibited, and the deterioration of mechanical properties may occur. When the thickness of the separator 13 is greater than 100 µm, battery characteristics may be deteriorated during high-rate charging/discharging. In addition, the separator 13 may have a porosity of 40 to 60%, and may have an air permeability of 150 to 300 sec/100 ml.

When the separator 13 according to one embodiment of the present invention is used, since the porous coating layer is provided on both sides of the porous polymer substrate, a solid electrolyte interface layer may be uniformly formed due to the improvement of impregnation performance with respect to the electrolyte, and superior air permeability may be secured as compared to a conventional single-sided inorganic-coated separator 13. For example, the air permeability may be within 120 sec/100 cc. In addition, even when the inorganic porous coating layer is provided on both sides of the porous polymer substrate, a thickness comparable to that of the conventional single-sided inorganic-coated separator 13 may be realized. For example, the thickness may be within 15.0 µm.

Further, when the separator 13 according to one embodiment of the present invention is used, the stability of the separator 13 may be improved so that heat- and pressure-resistant properties may be secured. Specifically, it is possible to secure a heat-resistant property having a heat-shrinkage property of 5% or less at 180 °C and secure a puncture strength of 550 gf or more, and damage or penetration of the separator 13 in a step portion may be prevented when core deformation occurs during a cycle of the battery in which the separator 13 is employed.

An electrode assembly manufactured using the above-described electrode stack will be described.

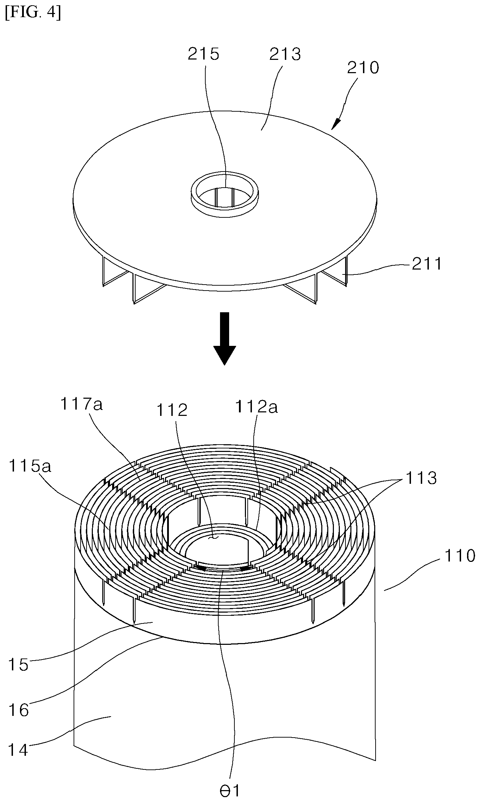

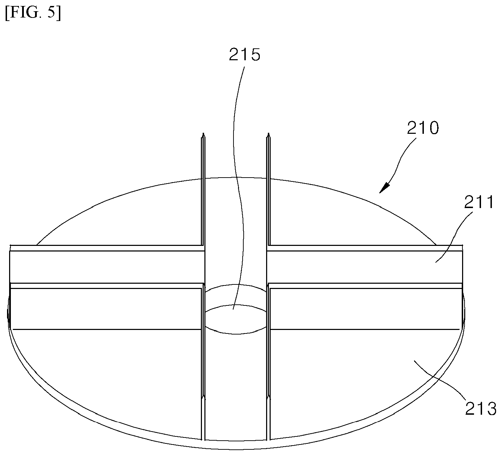

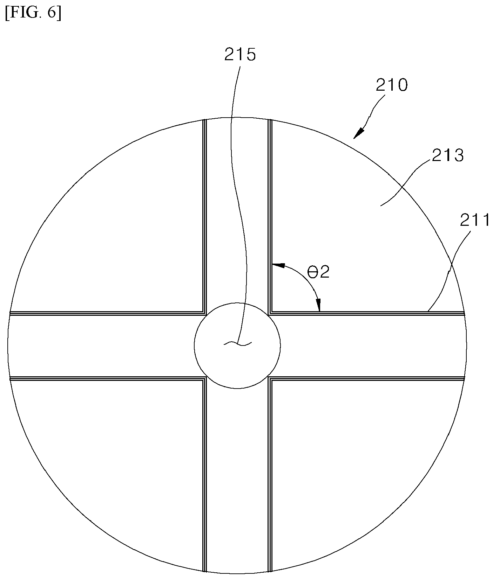

Referring to FIGS. 4 to 9, the electrode assembly 110 includes an electrode cell body portion 111, a plurality of unbent portions 115a, and a plurality of forming portions 117.

The electrode cell body portion 111 is a cylindrical portion wound in a jelly-roll type in a state in which the separator 13 is stacked between the first electrode sheet 11 and the second electrode sheet 12 in the form of a sheet. As described above, the uncoated portion 15, on which the active material layer is not coated, is formed in the end portion of each of the first electrode sheet 11 and the second electrode sheet 12 in the width direction and disposed on each of one side and the other side of the electrode cell body portion 111 in the axial direction, and extends in the axial direction.

The electrode cell body portion 111 may be formed by winding the electrode stack, which extends long in the length direction, around a winding rod (not shown) and withdrawing the winding rod from the electrode cell body portion 111. In this case, as a larger number of the first electrode sheets 11, the second electrode sheets 12, and the separators 13 are stacked on the electrode stack 10, the winding time and manufacturing time of the electrode assembly 110 may be reduced. A hollow core portion 112 is configured at a place from which the winding rod is withdrawn from the electrode cell body portion 111.

The uncoated portion 15 of the first electrode sheet 11 is exposed at one side of the electrode cell body portion 111 in the axial direction by a predetermined height, and the uncoated portion 15 of the second electrode sheet 12 is exposed at the other side of the electrode cell body portion 111 in the axial direction by a predetermined height.

Further, a recessed portion 112a is provided in the section of the uncoated portion, which is adjacent to the core portion 112, due to the uncoated portion removed portion C described above.

A cutter portion 210 cuts the uncoated portion 15 of the electrode cell body portion 111 in the axial direction. Accordingly, a cut line 113 is formed between the unbent portion 115a and a bending planned portion 117a. The cut line 113 divides the unbent portion 115a and the bending planned portion 117a in the peripheral direction. That is, the cut line 113 separates the unbent portion 115a and the bending planned portion 117a from each other. The cut line 113 is formed in a shape extending in the axial direction from an end portion of the uncoated portion 15 in the axial direction toward the electrode cell body portion 111. At this point, the state in which the unbent portion 115a and the bending planned portion 117a are erected along the axial direction of the electrode cell body portion 111 is maintained as it is.

Accordingly, the unbent portion 115a and the bending planned portion 117a are provided in the uncoated portion 15 of the electrode cell body portion 111.

The cutter portion 210 configured to cut and process the cut line 113 may use an ultrasonic cutter to prevent a buckling phenomenon that may occur when the uncoated portion having a small thickness is cut in the axial direction.

The cutter portion 210 includes a plurality of blades 211 disposed in directions corresponding to the radial direction of the electrode cell body portion 111, and a vibration generating portion 213 to which the blades 211 are fixed.

The vibration generating portion 213 includes a circular plate and a vibration source for vibrating the circular plate.

Each of the plurality of blades 211 includes a base end portion fixed to a surface of the circular plate of the vibration generating portion 213 and a front end portion at which a sharp blade edge may be provided, and extends in a direction corresponding to the axial direction of the electrode cell body portion 111.

The plurality of blades 211 are radially disposed around a central portion of the vibration generating portion 213. For example, a pair of blades 211 defining the bending planned portion 117a may be formed in four places in the shape of a cross (+) around the central portion of the vibration generating portion 213. Alternatively, the pair of blades 211 may be radially disposed in six places at intervals of 60°. Alternatively, a pair of second blades 221 may be radially disposed in three places at intervals of 120°. The angle between the pair of blades 211 may be appropriately selected according to the diameter of the electrode cell body portion 111, the capacity of the battery pack, and the shape of the current collector plate to be welded to the electrode cell body portion 111.

In the embodiment, a straight-line structure in which the pair of blades 211 defining the bending planned portion 117a are disposed in parallel to each other is exemplified as a preferable structure. However, a pair of first blades 211 are not necessarily strictly parallel to each other. For example, the pair of blades 211 may have a shape in which a distance between the blades 211 gradually increases in a centrifugal or centripetal direction. In addition, although it is exemplified that the blade 211 has a straight-line shape, the blade 211 is not necessarily to have the straight-line shape. For example, the blade 211 may also have a gently curved shape.

A circumferential distance between the pair of blades 211 and another pair of blades 211 adjacent thereto may decrease in the centripetal direction, and may increase in the centrifugal direction. That is, this may define a sector shape of the unbent portions 115a.

The vibration generating portion 213 may include an ultrasonic vibrator. A first communication hole portion 215 is formed in the central portion of the vibration generating portion 213 to communicate with the core portion. The vibration generating portion 213 is ultrasonically vibrated when the blade 211 moves in the axial direction of the electrode cell body portion 111 and cuts the uncoated portion 15.

When a force by which the blade 211 presses the uncoated portion 15 in the axial direction is not used to process the cut line 113 but presses the uncoated portion 15, there is a possibility in which the uncoated portion 15 is buckled or a portion of the uncoated portion 15 near the cut line 113 is deformed such as being bent or folded.

On the other hand, when the blade 211 is ultrasonically vibrated, the above phenomenon is prevented when the blade 211 cuts the uncoated portion 15, and the cutting process is very smoothly performed. Accordingly, a speed at which the uncoated portion 15 is cut may be improved, and the cut line 113 of the uncoated portion 15 may be smoothly formed. As long as the blade 211 vibrates, various vibration methods may be applied to the vibration generating portion 213.

] The plurality of unbent portions 115a may be disposed along the circumferential direction around the core portion 112 at equal intervals. In addition, the plurality of unbent portions 115a may each be formed in the same size and the same shape.

The recessed portion 112a is formed between the uncoated portion 15 and the core portion 112 at one side or both sides of the electrode cell body portion 111 in the axial direction. The recessed portion 112a is formed to be concentric with the core portion 112. The recessed portion 112a is formed in a ring shape to surround the core portion 112.

A height of an upper end portion of the recessed portion 112a may substantially correspond to a height of a lower end portion of the cut line 113. A width of the recessed portion 112a in the radial direction may be formed to be equal to or to be slightly greater or less than a height of the uncoated portion 15 in the axial direction, which is measured from the lower end portion of the cut line 113.

The plurality of forming portions 117 are formed by pressing and laying down the bending planned portions 117a of the uncoated portion 15, which are disposed between the unbent portions 115a, in a direction crossing the axial direction, i.e., in the radial direction. The plurality of forming portions 117 may be formed by pressing and laying down the bending planned portions 117a of the uncoated portion 15 using a press portion 230 to be described below. In this case, the plurality of forming portions 117 may be laid down while a plurality of uncut pieces constituting the bending planned portions 117a are continuously overlapped. Accordingly, the forming portion 117 may be formed to be inclined with respect to the axial direction of the electrode cell body portion 111, or may be formed to be flat by being completely laid down.

The plurality of forming portions 117 are portions welded to current collector plates 130 and 140 to form a current path (current passage). Additionally, the plurality of unbent portions 115a may also be in contact with or welded to the current collector plates 130 and 140, and may be connected to the current collector plates 130 and 140 to be electrically communicated therewith. However, since the unbent portion 115a is welded (i.e., laser welded) to the current collector plates 130 and 140 in a state of being in line contact with the current collector plates 130 and 140, an effect of increasing the current path by the unbent portion 115a is not so great as compared to the forming portion 117. On the other hand, since the forming portion 117 is formed by laying down the bending planned portion 117a in the radial direction, the forming portion 117 covers a gap between the uncoated portions 15 that are spaced apart by as much as the thickness of the separator 13. Since the forming portion 117 is welded to the current collector plates 130 and 140 in the state of being in surface contact therewith, the current path of the electrode assembly 110 and the current collector plates 130 and 140 may be relatively increased as an area of the forming portion 117 is increased. Since the forming portion 117 increases the current path by as much as the sum of the gap between the uncoated portions 15, even when applied to a battery cell 100 having a large capacity, an increase in a heating amount of the battery cell 100 may be suppressed and the possibility of ignition may be reduced.

When the unbent portion 115a is exposed without being welded to the current collector plates 130 and 140, an electrolyte impregnation property may be increased when the electrolyte is injected into the electrode assembly. The electrolyte impregnation property may be reduced in the portion of the forming portion 117 due to the bending of the uncut pieces, but this is compensated for as the cut surface 115a is adjacent to the forming portion 117, and thus there is no particular problem in the electrolyte impregnation.

According to the present invention, the unbent portion 115a and the bending planned portion 117a are separated from each other in the peripheral direction in the uncoated portion 15 by the cutter portion configured to form the cut line in the axial direction, and then the bending planned portion 117a is pressed and laid down, thereby forming the forming portion 117. Accordingly, when the forming portion 117 is formed by pressing the bending planned portion 117a, a boundary portion 16 of the forming portion 117 and the unbent portion 115a may be prevented from being torn or irregularly distorted and deformed.

Further, since the boundary portion 16 of the forming portion 117 and the unbent portion 115a is prevented from being torn or deformed, the electrode sheets 11 and 12 of opposite polarities may be prevented from being in contact with each other in the torn or deformed portion. Further, since the boundary portion 16 of the uncoated portion 15 and the coated portion 14 is prevented from being torn or deformed, the active material applied to the coated portion 14 may be prevented from being detached from the coated portion 14 or a bonding force may be prevented from being weakened. Accordingly, it is possible to suppress a decrease in performance and capacity of the battery cell 100.

In addition, an edge of the separator 13 may be prevented from being delaminated or damaged due to the torn or deformed portion of the boundary portion 16. Thus, a short circuit between the first electrode sheet 11 and the second electrode sheet 12 may be prevented. Furthermore, the heating amount of the battery cell 100 may be reduced or the possibility of an explosion may be significantly reduced.

Further, the forming portion 117 is formed by pressing the bending planned portion 117a in a state in which the unbent portions 115a are separated from each other in the peripheral direction on both sides of the bending planned portion 117a, and thus it is possible to prevent the uncut pieces of the bending planned portion 117a from splaying while being erected obliquely due to a spring back phenomenon. In addition, when the bending planned portion 117a is pressed with a strong pressure by using the press portion 230, the forming portions 117 (uncut pieces of the bending planned portion 117a) may overlap each other in a state of being in close contact with the unbent portions 115a as flat as possible. Accordingly, a welding cross-sectional area may be significantly increased as the forming portion 117 and the cut portion are welded to the current collector plates 130 and 140 in a state of being in surface contact therewith. In addition, as the welding cross-sectional area increases, the cross-sectional area of the current path increases, and thus there is an advantage that resistance of the battery cell 100 may be significantly reduced. This is because resistance is inversely proportional to the cross-sectional area of the path through which current flows.

The unbent portions 115a are formed in a sector shape along the circumferential direction around the core portion 112 of the electrode cell body portion 111. A vertex portion of the unbent portion 115a faces the core portion 112. Since the unbent portions 115a are formed in a sector shape, each forming portion 117 may be radially disposed around the core portion 112 between the plurality of unbent portions 115a. In addition, a width of the forming portion 117 on an outer side may be equal to or greater than a width of the forming portion 117 on a side of the core portion 112 depending on a central angle of the unbent portions 115a in a sector shape.

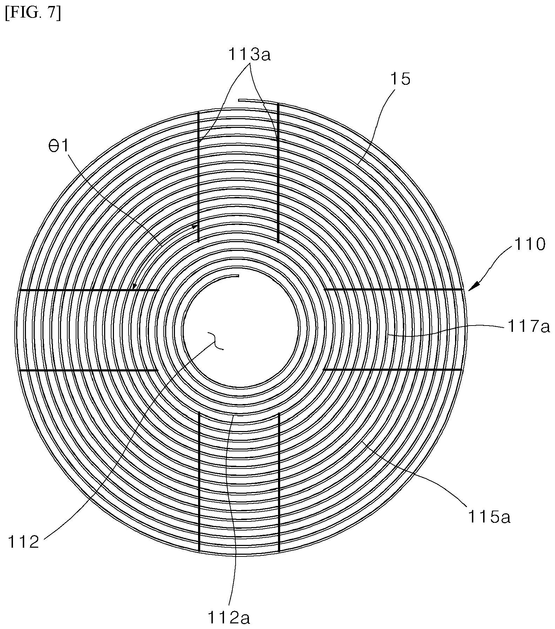

Preferably, the unbent portion 115a may have a central angle θ1 (see FIG. 7) of 60° to 120°. The central angle θ1 is an angle at which both sides of a sector are spread out at the vertex of the sector. When the central angle θ1 of the unbent portion 115a is 90°, four unbent portions 115a may be formed in a cross shape in the circumferential direction of the uncoated portion 15. When the central angle θ1 of the unbent portion 115a is 60°, six cut surfaces may be formed in the circumferential direction of the uncoated portion 15. When the central angle θ1 of the unbent portion 115a is 120°, three cut surfaces may be formed in the circumferential direction of the uncoated portion 15. In the present invention, the central angle of the unbent portion is not limited to the above range. For example, the central angle may be 45° or 30°, or may also be 180°.

In the bending planned portion 117a, a portion spaced outward in the axial direction from the boundary portion 16 between the uncoated portion 15 and the coated portion 14 by a predetermined distance is bent. The portion is a portion corresponding to a height corresponding to the end portion of the cut line 113. Accordingly, when the bending planned portion 117a is bent, the uncoated portion 15 is bent at a location spaced apart from the coated portion 14 so that the deformation of the uncoated portion due to the bending is not transferred to the coated portion, and thus the coated active material may be prevented from being detached from the coated portion 14.

The central angle of the unbent portion 115a may be appropriately selected in consideration of the diameter of the electrode cell body portion 111, the capacity of the battery cell 100, and the like. For example, as the diameter of the electrode cell body portion 111 increases, the central angle of the unbent portion 115a may be formed to be close to 60°. This is because, as the diameter of the electrode cell body portion 111 increases, increasing the cross-sectional area of the current path is advantageous in preventing heat generation or ignition, and thus, the central angle of the unbent portion 115a is decreased to increase the area of the forming portion 117. In addition, as the capacity of the electrode cell body portion 111 increases, the central angle of the unbent portion 115a may be formed to be close to 60°.

The forming portions 117 may be radially formed around the core portion 112 of the electrode cell body portion 111. When four forming portions 117 are formed in a cross shape, the central angle of the unbent portion 115a is 90°. When six forming portions 117 are radially formed around the core portion 112, the central angle of the unbent portion 115a is 60°. When three forming portions 117 are radially formed around the core portion 112, the central angle of the unbent portion 115a is 120°. Since the forming portions 117 are radially formed around the core portion 112, the current path may be evenly distributed in the circumferential direction of the electrode cell body portion 111.

The forming portion 117 may be formed in a shape in which the bending planned portions 117a of the uncoated portion 15 are laid down toward the core portion 112 of the electrode cell body portion 111. Accordingly, the forming portion 117 is prevented from protruding outward from an outer circumferential surface of the electrode cell body portion 111, so that the electrode assembly 110 may be smoothly inserted into a battery can 120 when the battery cell 100 is manufactured. In addition, the forming portion 117 may be prevented from being caught by the battery can 120.

In the case in which the bending planned portions 117a are laid down toward the core portion 112 of the electrode cell body portion 111, when the bending planned portion 117a adjacent to the core portion 112 is laid down, a phenomenon may occur in which the bending planned portion 117a covers the core portion 112.

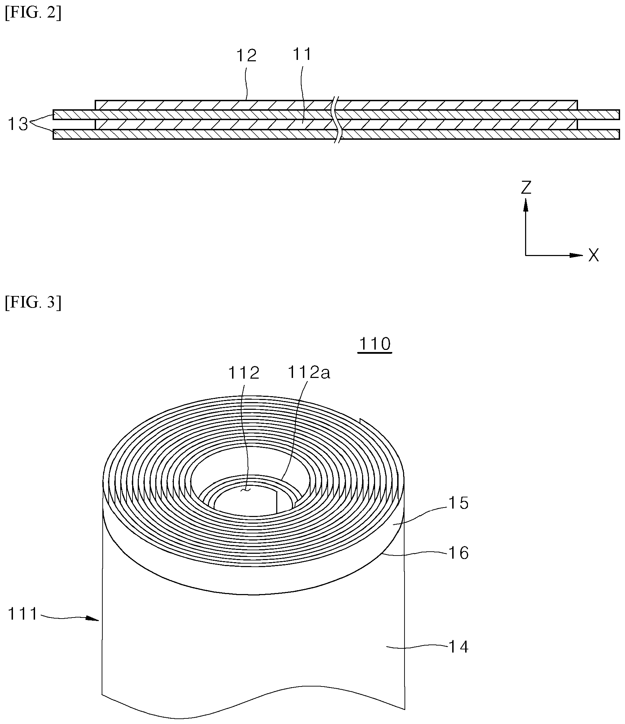

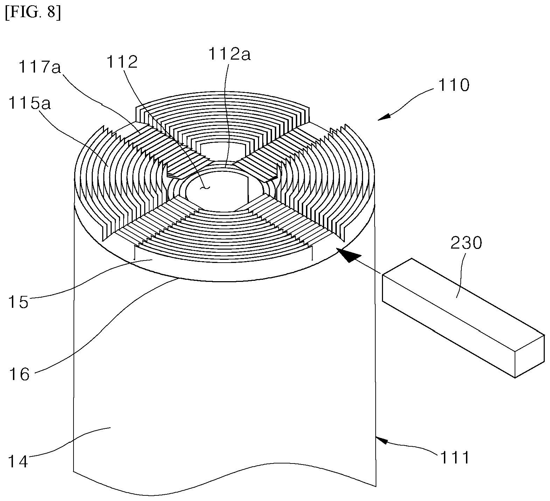

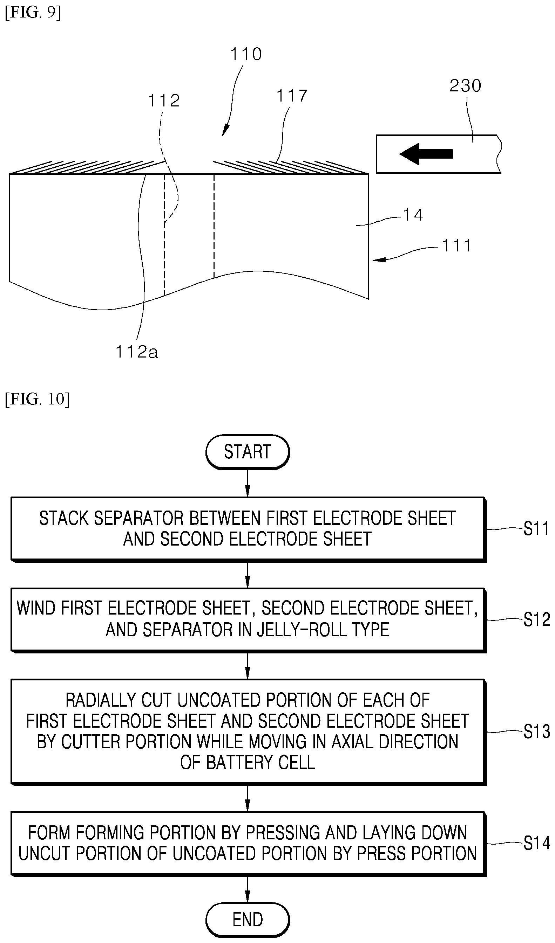

The core portion 112 may be a path through which an electrolyte is injected, and in some cases, the core portion 112 may be a path through which a welding rod is inserted. Accordingly, it is preferable that the core portion 112 is open in the axial direction. Accordingly, as shown in FIG. 1B, when the electrode assembly is fabricated in a state in which the partial section C of the uncoated portion, which is located on the core side, is cut in advance as described above, the uncoated portion adjacent to the core portion 112 is removed as shown in FIGS. 3 and 4, and when the forming portion 117 is formed in this state, a case in which the core portion 112 is covered does not occur as shown in FIGS 8 and 9.

The forming portions 117 may be formed in parallel with the radial direction of the electrode cell body portion 111. The forming portions 117 may be symmetrically formed around the core portion 112 of the electrode cell body portion 111. Accordingly, the forming portions 117 may form the current path having almost the same area in the radial direction of the electrode cell body portion 111.

The core portion 112 may be formed at a central portion of the electrode cell body portion 111. The core portion 112 is formed in a hollow shape passing through the central portion of the electrode cell body portion 111. A cross section of the core portion 112 may have a circular shape. Since the core portion 112 is formed in a hollow shape, an electrolyte injector (not shown) may inject an electrolyte through the core portion 112 after the electrode assembly 110 is inserted into the battery can 120. Accordingly, the manufacturing time of the battery cell 100 may be reduced by reducing an electrolyte injection time. In addition, when the electrolyte injector is inserted into the core portion 112, the electrode sheets 11 and 12 or the separator 13 near the core portion 112 may be prevented being caught and torn or damaged.

The electrode cell body portion 111 may be formed in a cylindrical shape. Accordingly, the electrode cell body portion 111 may be inserted such that an outer side surface of the electrode cell body portion 111 is in close contact with an inner side surface of the cylindrical battery can 120.

Next, a method of manufacturing the battery cell according to the present invention will be described with reference to FIG. 10 or the like.

A separator 13 is stacked between a first electrode sheet 11 and a second electrode sheet 12 in the form of a sheet (S11). At this point, a structure in which the first electrode sheet 11, the second electrode sheet 12, and the separator 13 are stacked is referred to as an electrode stack 10. In the electrode stack 10, an uncoated portion 15 of the first electrode sheet 11 protrudes from one side of the electrode stack 10 in a width direction, and an uncoated portion 15 of the second electrode sheet 12 protrudes from the other side of the electrode stack 10 in the width direction.

The first electrode sheet 11, the second electrode sheet 12, and the separator 13 are wound in a jelly-roll type (S12). At this point, the electrode stack 10 is wound on a winding rod to form an electrode assembly 110, and the winding rod is separated from the electrode assembly 110. A core portion 112 having a hollow shape is formed in the portion, from which the winding rod is withdrawn, at a central portion of the electrode assembly 110. The core portion 112 is formed to pass through the electrode assembly 110 in an axial direction. As a larger number of the first electrode sheets 11, the second electrode sheets 12, and the separators 13 are stacked on the electrode stack 10, the winding time and manufacturing time of the electrode assembly 110 may be reduced.

The partial region C of the uncoated portion shown in FIG. 1B may be removed after the process of forming the electrode stack (S11) and before the winding process (S12), which may be a process of cutting and removing a partial region of the uncoated portion by a laser cutting process.

A depth at which the uncoated portion 15 is removed in the predetermined section C and a depth of a cut line 113 may correspond to each other.

The uncoated portion 15 of each of the first electrode sheet 11 and the second electrode sheet 12 is cut radially as a cutter portion 210 moves in the axial direction of the battery cell 100 (S13). At this point, the cutter portion 210 cuts the uncoated portion 15 of the electrode cell body portion 111 in the axial direction to separate unbent portions 115a and bending planned portions 117a in a peripheral direction. In this case, the state in which the unbent portions 115a and the bending planned portions 117a are erected along the axial direction of the electrode cell body portion 111 is maintained as it is.

The bending planned portions 117a of the uncoated portion 15 are pressed by a press portion 230 and laid down to form forming portions 117 (S14). The plurality of forming portions 117 are disposed between the unbent portions 115a, and are formed by pressing and laying down the bending planned portions 117a of the uncoated portion 15. The plurality of forming portions 117 may be formed by pressing and laying down the bending planned portions 117a of the uncoated portion 15 using the press portion 230 to be described below. In this case, the plurality of forming portions 117 may be laid down while a plurality of uncut pieces constituting the bending planned portions 117a are continuously overlapped. Accordingly, the forming portions 117 may be formed to be slightly inclined with respect to the axial direction of the electrode cell body portion 111, or may be formed to be flat.

The forming portion 117 may be formed as a lower end portion of the bending planned portion 117a corresponding to a cutting depth of the cut line 113 is bent.

The unbent portions 115a are laser-welded to current collector plates 130 and 140 in a state of being in line contact with the current collector plates 130 and 140. This results in an effect of increasing a current path. On the other hand, since the forming portion 117 is formed by laying down the bending planned portion 117a in a radial direction, the forming portion 117 covers a gap between the uncoated portions 15 that are spaced apart by as much as a thickness of the separator 13. Since the forming portion 117 is welded to the current collector plates 130 and 140 in the state of being in surface contact therewith, the current path of the electrode assembly 110 and the current collector plates 130 and 140 may be further increased as an area of the forming portion 117 is increased. Since the forming portion 117 increases the current path by as much as the sum of the gap between the uncoated portions 15, even when applied to a battery cell 100 having a large capacity, an increase in a heating amount of the battery cell 100 may be suppressed and the possibility of ignition may be reduced.

In the manufacturing method of the present invention, the unbent portion 115a and the bending planned portion 117a are separated from each other in the uncoated portion 15, and then the bending planned portion 117a is pressed and laid down to form the forming portion 117. Accordingly, when the forming portion 117 is formed by pressing the bending planned portion 117a, a boundary portion 16 of the forming portion 117 and the unbent portion 115a may be prevented from being torn or irregularly distorted and deformed.

In addition, an edge of the separator 13 may be prevented from being delaminated or damaged due to the torn or deformed portion of the boundary portion 16. Thus, a short circuit between the first electrode sheet 11 and the second electrode sheet 12 may be prevented. Furthermore, a heating amount of the battery cell 100 may be reduced or the possibility of an explosion may be significantly reduced.

The unbent portion 115a may be formed in a sector shape along a circumferential direction around the core portion 112 of the electrode cell body portion 111. A vertex portion of the unbent portion 115a faces the core portion 112. Since the unbent portion 115a is formed in a sector shape, each forming portion 117 may be radially disposed around the core portion 112 between the plurality of unbent portions 115a.

The unbent portion 115a may have a central angle θ1 of 60° to 120°. For example, when the central angle θ1 of the unbent portion 115a is 90°, four unbent portions 115a may be formed in a cross shape in the circumferential direction of the uncoated portion 15. When the central angle θ1 of the unbent portion 115a is 60°, six cut surfaces may be formed in the circumferential direction of the uncoated portion 15. When the central angle θ1 of the unbent portion 115a is 120°, three cut surfaces may be formed in the circumferential direction of the uncoated portion 15.

In the bending planned portion 117a, a portion spaced outward in the axial direction from the boundary portion 16 between the uncoated portion 15 and the coated portion 14 by a predetermined distance is bent. The portion is a portion corresponding to a height corresponding to an end portion of the cut line 113. Accordingly, when the bending planned portion 117a is bent, the uncoated portion 15 is bent at a location spaced apart from the coated portion 14 so that the deformation of the uncoated portion due to the bending is not transferred to the coated portion, and thus a coated active material may be prevented from being detached from the coated portion 14.

The forming portions 117 may be radially formed around the core portion 112 of the electrode cell body portion 111. When four forming portions 117 are formed in a cross shape, the central angle θ1 of the unbent portion 115a is 90°. When six forming portions 117 are radially formed around the core portion 112, the central angle θ1 of the unbent portion 115a is 60°. When three forming portions 117 are radially formed around the core portion 112, the central angle θ1 of the unbent portion 115a is 120°. Since the forming portions 117 are radially formed around the core portion 112, the current path may be evenly distributed in the circumferential direction of the electrode cell body portion 111.

The forming portion 117 may be formed in a shape in which the bending planned portions 117a of the uncoated portion 15 are laid down toward the core portion 112 of the electrode cell body portion 111. Accordingly, the forming portion 117 is prevented from protruding outward from an outer circumferential surface of the electrode cell body portion 111, so that the electrode assembly 110 may be smoothly inserted into a battery can 120 when the battery cell 100 is manufactured. In addition, the forming portion 117 may be prevented from being caught by the battery can 120.

The forming portions 117 may be formed in parallel with the radial direction of the electrode cell body portion 111. The forming portions 117 may be symmetrically formed around the core portion 112 of the electrode cell body portion 111.

The cutter portion 210 cuts the uncoated portion 15 while being vibrated by a vibration generating portion 213. The vibration generating portion 213 may include an ultrasonic vibrator. Since the uncoated portion 15 is cut while the cutter portion 210 vibrates, the performance and speed of cutting the uncoated portion 15 may be improved.

A battery cell manufactured using the above-described electrode assembly will be described.

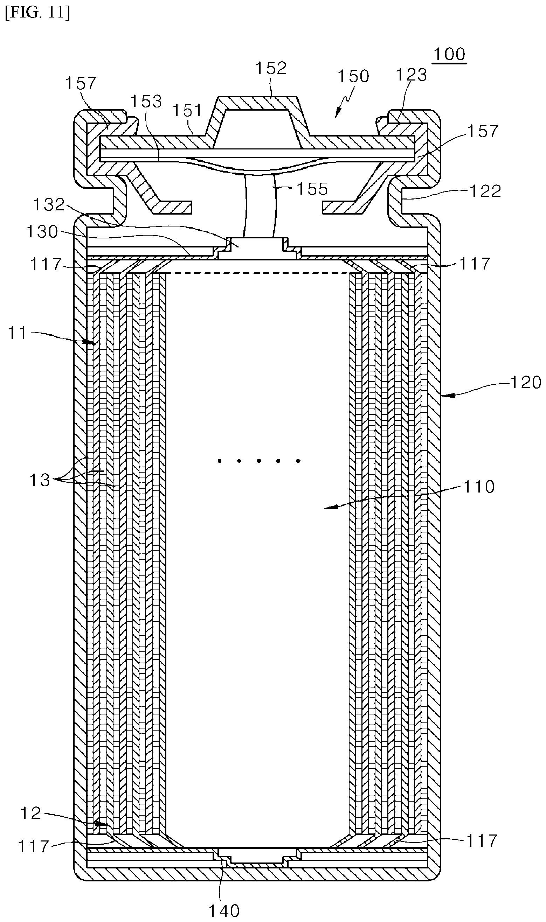

Referring to FIG. 11, the battery cell 100 according to the present invention includes the electrode assembly 110, the battery can 120, a sealing cap portion 150, and a first current collector plate 130.

Since the electrode assembly 110 is substantially the same as that described above, a description thereof will be omitted.

The electrode assembly 110 is accommodated in the battery can 120. The battery can 120 is electrically connected to one of the first electrode sheet 11 and the second electrode sheet 12 and has a first polarity. The battery can 120 may be formed of a conductive material to allow current to flow therethrough. For example, the battery can 120 may be made of a material including a stainless-steel material, an aluminum material, or the like. The battery can 120 may be formed in a cylindrical shape having an open end formed at one side thereof.

The sealing cap portion 150 seals the open end of the battery can 120. The sealing cap portion 150 is installed to be insulated from the battery can 120. The sealing cap portion 150 prevents external foreign substances or moisture from penetrating into the battery can 120.

The first current collector plate 130 is electrically connected to the other one of the first electrode sheet 11 and the second electrode sheet 12 and has a second polarity. The first current collector plate 130 may be disposed between the electrode assembly 110 and the sealing cap portion 150. The first current collector plate 130 is electrically connected to the sealing cap portion 150. The first current collector plate 130 may be welded to the uncoated portion 15 of the other one of the first electrode sheet 11 and the second electrode sheet 12. At this point, the forming portion 117 of the uncoated portion 15 may be welded to the first current collector plate 130 in a state of being in surface contact therewith, and the unbent portion 115a of the uncoated portion 15 may be welded to the first current collector plate 130 in a state of being in line contact therewith. Thus, since a welding cross-sectional area of the uncoated portion 15 and the first current collector plate 130 is increased, a cross-sectional area of a current path is increased, thereby significantly reducing electrical resistance of the battery cell 100. In addition, a heating amount of the battery cell 100 may be reduced, and the possibility of ignition of the battery cell 100 may be lowered.

The first electrode sheet 11 may be a negative electrode sheet and the second electrode sheet 12 may be a positive electrode sheet. In addition, the first electrode sheet 11 may be a positive electrode sheet, and the second electrode sheet 12 may be a negative electrode sheet.

An electrolyte is injected into the battery can 120 through the core portion 112 of the electrode assembly 110.

The electrolyte may be a salt having a structure of A⁺B⁻. Here, A⁺ includes an alkali metal cation such as Li⁺, Na⁺, or K⁺ or a combination thereof. In addition, B⁻ includes at least one anion selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆-, AsF₆-, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

The electrolyte may also be used in a state of being dissolved in an organic solvent. As the organic solvent, propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), γ-butyrolactone, or a mixture thereof may be used.

The sealing cap portion 150 may further include an insulator 157 configured to cover the first current collector plate 130 and having an edge interposed between the first current collector plate 130 and an inner circumferential surface of a support portion 122. The insulator 157 electrically insulates the sealing cap portion 150 from the battery can 120.

The insulator 157 may be made of a polymer resin having insulation properties. For example, the insulator 157 may be made of polyethylene, polypropylene, polyimide, or polybutylene terephthalate.

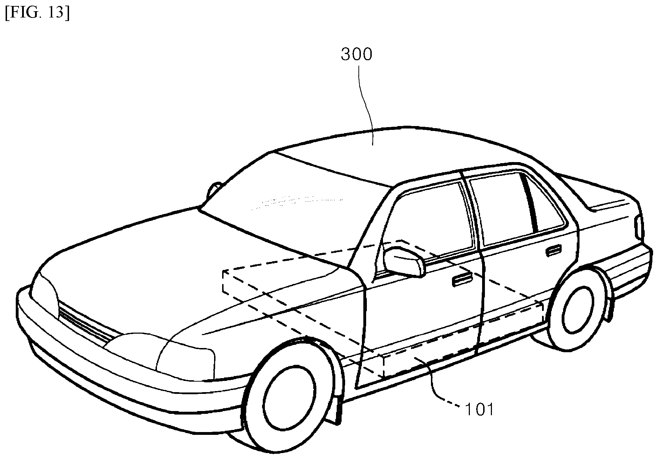

The sealing cap portion 150 includes a cap plate 151 installed to block the open end of the battery can 120. The entire cap plate 151 may be formed in a circular plate shape. An external terminal 152 is formed in a central portion of the cap plate 151 to protrude outward (upper side in FIG. 13).

The sealing cap portion 150 includes a vent plate 153 disposed below the cap plate 151. The vent plate 153 is broken when an internal pressure of the battery can 120 is greater than or equal to a predetermined pressure. The vent plate 153 prevents an explosion of the battery cell 100.

The vent plate 153 and the first current collector plate 130 are electrically connected to each other through a lead portion 155. In addition, the vent plate 153 is in contact with the cap plate 151 to form a portion of the current path.

The support portion 122 recessed inward from the battery can 120 is formed below the open end of the battery can 120. The vent plate 153 and the cap plate 151 are stacked on an upper side of the support portion 122

The insulator 157 is interposed between an inner side surface of the support portion 122 and a peripheral portion of each of the vent plate 153 and the cap plate 151. The insulator 157 covers the first current collector plate 130, and the edge of the insulator 157 is interposed between the first current collector plate 130 and the inner circumferential surface of the support portion 122. The insulator 157 forms a portion of the sealing cap portion 150.

A clamping portion 123 is formed at the open end of the battery can 120 so as to press the cap plate 151 and the insulator 157. The clamping portion 123 and the open end of the battery can 120 are bent inward to seal a space between a circumference of the cap plate 151 and the open end of the battery can 120. Since the clamping portion 123 in the support portion 122 presses and fixes the circumferences of each of the first current collector plate 130 and the vent plate 153, the movement of the first current collector plate 130 and the vent plate 153 is limited, thereby improving assembly stability of the battery cell 100. In addition, it is possible to prevent the sealing of the battery can 120 from being broken due to an external impact.

One of the first electrode sheet 11 and the second electrode sheet 12 may be electrically connected to the battery can 120 through a second current collector plate 140. At this point, the second current collector plate 140 may be welded to the uncoated portion 15 formed in one of the first electrode sheet 11 and the second electrode sheet 12. The unbent portion 115a and the forming portion 117 of the uncoated portion 15 may be welded to the second current collector plate 140 by laser. Thus, since the welding cross-sectional area of the uncoated portion 15 and the second current collector plate 140 is increased, the cross-sectional area of the current path is increased, thereby significantly reducing the electrical resistance of the battery cell 100. In addition, the heating amount of the battery cell 100 may be reduced, and the possibility of ignition of the battery cell 100 may be lowered.

Further, the uncoated portion 15 formed in one of the first electrode sheet 11 and the second electrode sheet 12 may be directly welded to the inner side surface of the battery can 120.

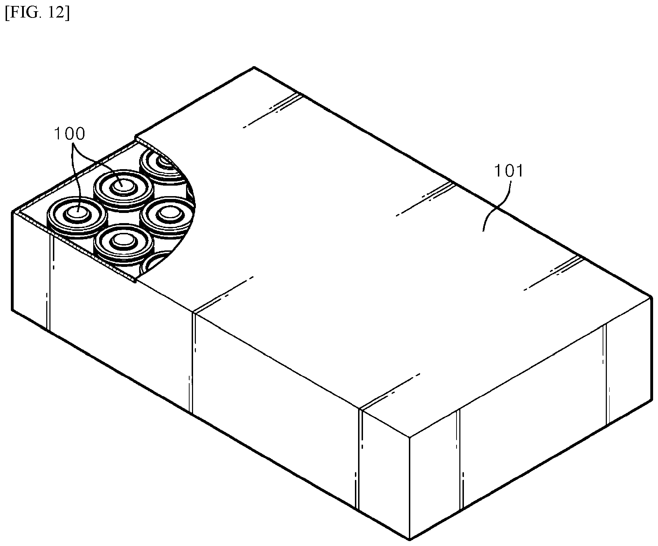

FIG. 12 is a perspective view illustrating a state in which the electrode assembly according to the present invention is accommodated in a pack housing.

Referring to FIG. 12, a battery pack according to the embodiment of the present invention includes an assembly to which cylindrical battery cells 100 are electrically connected and a pack housing 101 configured to accommodate the assembly. The cylindrical battery cell 100 may be one of the battery cells 100 according to the above-described embodiment. For convenience of description, in the drawing, components such as a bus bar (not shown), a cooling unit (not shown), an external terminal (not shown), and the like for electrically connecting the cylindrical battery cells 100 are omitted.

The battery pack may be mounted on a vehicle 300. The vehicle 300 may be, for example, an electric vehicle, a hybrid vehicle, or a plug-in hybrid vehicle. The vehicle includes a four-wheeled vehicle or a two-wheeled vehicle.

FIG. 13 is a view for describing a vehicle including the battery pack according to the present invention.

Referring to FIG. 13, the vehicle 300 according to one embodiment of the present invention includes the battery cell 100 according to one embodiment of the present invention. The vehicle is operated by receiving power from the battery cell 100 according to one embodiment of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and spirit of the present invention. Further, although the operating effects according to the configuration of the present invention are not explicitly described while describing an embodiment of the present invention, it should be appreciated that predictable effects are also to be recognized by the configuration.

## Claims

1. A cutting device configured to cut at least a portion of an uncoated portion (15) of an electrode assembly (110) that includes an electrode cell body portion (111) in which a separator (13), and a first electrode sheet (11) and a second electrode sheet (12) in the form of a sheet are wound in a state of being stacked, and the uncoated portion (15) on which an active material layer is not coated is provided on an end portion of at least one of the first electrode sheet (11) and the second electrode sheet (12) in a width direction, the cutting device comprising a cutter portion (210) configured to form a cut line in the uncoated portion (15), which extends in an axial direction of the electrode assembly (110), in the axial direction while moving in the axial direction.

2. The cutting device of claim 1, wherein the cutter portion (210) includes a plurality of blades (211) radially disposed and each extending in the axial direction.

3. The cutting device of claim 1, wherein the cutter portion (210) further includes a vibration generating portion (213).

4. An electrode assembly processing device comprising:
the cutting device of claim 1; and
a press portion (230) configured to press and lay down a bending planned portion (117a), in which the uncoated portion (15) is not cut, to form a forming portion (117),
wherein the press portion (230) lays down the bending planned portion (117a) of the uncoated portion (15) in a radial direction of the electrode cell body portion (111) while moving in the radial direction of the electrode cell body portion (111).

5. A method of manufacturing a battery cell (100), the method comprising:
fabricating an electrode stack (10) by stacking and a separator (13), and a first electrode sheet (11) and a second electrode sheet (12) in the form of a sheet (S11);
fabricating an electrode cell body portion (111) by winding the electrode stack (10) (S12);
forming a cut line (113), by a cutter portion (210), in an uncoated portion (15) of the electrode cell body portion (111) in an axial direction of the electrode cell body portion (111) while moving in the axial direction; and
forming a forming portion (117) by pressing a bending planned portion (117a) provided between two adjacent cut lines (113) of the uncoated portion (15) and laying the bending planned portion (117a) down in a radial direction by a press portion (230).

6. The method of claim 5, wherein an unbent portion (115a) disposed between the two adjacent bending planned portions (117a) is formed in a sector shape along a circumferential direction around a core portion (112) of the electrode cell body portion (111).

7. The method of claim 5, wherein the unbent portion (115a) disposed between the two adjacent bending planned portions (117a) has a central angle of 30° to 180°.

8. The method of claim 5, wherein the forming portion (117) is radially formed around a core portion (112) of the electrode cell body portion (111).

9. The method of claim 5, wherein the forming portion (117) is formed in a shape in which the bending planned portion (117a) of the uncoated portion (15) is laid down toward a core portion (112) of the electrode cell body portion (111).

10. The method of claim 5, wherein the forming portion (117) is formed along the radial direction of the electrode cell body portion (111).

11. The method of claim 5, wherein
a cutting depth of the cut line (113) reaches a predetermined portion that is spaced outward in the axial direction from a boundary portion (16) of the uncoated portion (15) and a coated portion (14) by a predetermined distance, and
the forming portion (117) is formed as a lower end portion of the bending planned portion (117a) corresponding to the cutting depth is bent.

12. The method of claim 5, wherein the cutter portion (210) cuts the uncoated portion (15) while being vibrated by a vibration generating portion (213).

13. The method of claim 5, further comprising removing a predetermined section (C) of the uncoated portion (15) of the electrode stack (10), which is disposed adjacent to a core side, between the two operations (S11 and S12).

14. The method of claim 13, wherein a depth at which the uncoated portion (15) is removed in the predetermined section (C) and a depth of the cut line (113) correspond to each other.

15. An electrode assembly (110) comprising:
an electrode cell body portion (111) in which a separator (13) is stacked between a first electrode sheet (11) and a second electrode sheet (12) in the form of a sheet, the first electrode sheet (11), the second electrode sheet (12), and the separator (13) are wound, and an uncoated portion (15), on which an active material layer is not coated, is formed in an end portion of each of the first electrode sheet (11) and the second electrode sheet (12) in a width direction;
a recessed portion (112a) disposed in the uncoated portion (15) of the electrode cell body portion (111) at a core side, and having a height at which the recessed portion (112a) is more recessed than the uncoated portion (15), which is disposed more outward than the uncoated portion (15) at the core side in a radial direction, in an axial direction;
a plurality of cut lines (113) provided in an outer portion than the recessed portion (112a) in the radial direction in the uncoated portion (15) of the electrode cell body portion (111) and formed to a predetermined depth in the axial direction;
a plurality of cut line arrays formed by arranging the plurality of cut lines (113) in a line; and
a plurality of forming portions (117) formed by pressing and laying down bending planned portions (117a) of the uncoated portion (15) disposed between the two cut line arrays adjacent to each other in a peripheral direction.

16. The electrode assembly (110) of claim 15, wherein an unbent portion (115a) disposed between the two forming portions (117) adjacent to each other in the peripheral direction is formed in a sector shape along a circumferential direction around a core portion (112) of the electrode cell body portion (111).

17. The electrode assembly (110) of claim 16, wherein the unbent portion (115a) has a central angle of 30° to 180°.

18. The electrode assembly (110) of claim 15, wherein a cutting depth of the cut line (113) reaches a predetermined portion that is spaced outward in the axial direction from a boundary portion (16) of the uncoated portion (15) and a coated portion (14) by a predetermined distance.

19. The electrode assembly (110) of claim 18, wherein the recessed portion (112a) has a height corresponding to the predetermined portion in the axial direction.

20. The electrode assembly (110) of claim 18, wherein the bending planned portion (117a) is bent and formed at a portion corresponding to the predetermined portion in the axial direction.

21. The electrode assembly (110) of claim 15, wherein the forming portion (117) is radially formed around a core portion (112) of the electrode cell body portion (111).

22. The electrode assembly (110) of claim 15, wherein the forming portion (117) is formed in a shape in which the bending planned portion (117a) is laid down toward a core portion (112) of the electrode cell body portion (111).

23. The electrode assembly (110) of claim 22, wherein the core portion (112) is formed in a hollow shape passing through a central portion of the electrode cell body portion (111), and
the forming portion (117) does not cover the core portion (112) in the axial direction.

24. The electrode assembly (110) of claim 15, wherein a width of the recessed portion (112a) in the radial direction corresponds to a height of the bending planned portion (117a) in the axial direction, which is measured from a lower end portion of the cut line (113) disposed adjacent to the recessed portion (112a) in the radial direction.

25. A battery cell (100) comprising:
the electrode assembly (110) of any one of claims 15 to 24;
a battery can (120) in which the electrode assembly (110) is accommodated and electrically connected to one of the first electrode sheet (11) and the second electrode sheet (12) to have a first polarity;
a sealing cap portion (150) configured to seal an open end of the battery can (120); and
a first current collector plate (130) electrically connected to the other one of the first electrode sheet (11) and the second electrode sheet (12) to have a second polarity.

26. The battery cell (100) of claim 25, wherein the first current collector plate (130) is welded to the forming portion (117).

27. A battery pack comprising at least one battery cell (100) of claim 26.

28. A vehicle comprising at least one battery pack of claim 27.
